# EUROPÄISCHE PATENTSCHRIFT

(11) **EP 1 251 341 B1**
(45) Veröffentlichungstag und Bekanntmachung des Hinweises auf die Patenterteilung: **15.06.2005**
(21) Anmeldenummer: 02008432.3
(22) Anmeldetag: 13.04.2002
(51) Int. Cl.: G01M 13/02

(54) **Verspannungsprüfstand**
Stress test rig
Banc d'essai de contrainte

(30) Priorität: 19.04.2001 DE 10119148
(43) Veröffentlichungstag der Anmeldung: 23.10.2002
(73) Patentinhaber: ZF Luftfahrttechnik GmbH, 34016 Calden (DE)
(72) Erfinder: Brüggemann, Detlef, 34292 Ahnatal (DE); Hüser, Hubertus, 33142 Büren (DE); Fischer, Willy Gerd, 34292 Ahnatal (DE)

(56) Entgegenhaltungen:
- DE-A- 4 325 403
- US-A- 4 362 055
- PATENT ABSTRACTS OF JAPAN vol. 013, no. 040 (P-820), 30. Januar 1989 (1989-01-30) & JP 63 236940 A (OSAKA SEISA ZOKI KK), 3. Oktober 1988 (1988-10-03)

## Beschreibung

Die Erfindung betrifft einen Verspannungsprüfstand mit mindestens zwei, einen Verspannkreis bildenden Getriebeeinheiten, diese verbindende Wellen, einem Antrieb, einem ein Überlagerungsgetriebe aufweisenden Verspannmechanismus zur Erzeugung eines Verspannmoments im Verspannkreis und zum Ausgleich von unterschiedlichen Übersetzungen der beiden Getriebeeinheiten und einem dem Verspannmechanismus zugeordneten Verspannmotor.

Verspannungsprüfstände bieten den Vorteil, dass ihr Antrieb im wesentlichen nur die Verluste, insbesondere Verzahnungs- und Lagerverluste im Verspannkreis aufbringen muss, so dass die Prüfgetriebe unter hoher Last betrieben werden können, ohne dass hierfür entsprechend leistungsstarke Antriebe notwendig sind. Insbesondere bei Getrieben für hohe Antriebsleistungen, wie beispielsweise Hubschraubergetrieben ist ein Verspannungsprüfstand besonders vorteilhaft.

Verspannungsprüfstände, welche mit einem Überlagerungsgetriebe ausgerüstet sind, können auch bei einem vom Übersetzungsverhältnis des Prüfstandsgetriebes abweichenden Übersetzungsverhältnis des Prüfgetriebes betrieben werden. Hierzu wird ein dritter, nicht im Verspannkreis befindlicher Anschluß des Überlagerungsgetriebes durch einen vom Hauptantrieb unabhängigen Verspannmotor/Generator mit einer sich aus dem gesamten Übersetzungsverhältnis von Prüfstand und Prüfling ergebenden Drehzahl, der sogenannten Schlupfdrehzahl, betrieben, um das Übersetzungsverhältnis des Prüfstandsgetriebes dem Übersetzungsverhältnis des Prüfgetriebes anzupassen.

Durch motorischen bzw. generatorischen Betrieb des Verspannmotors und Betrieb in beiden Drehrichtungen lässt sich eine Vier-Quadranten-Belastung des Prüflings erreichen. Jeder Quadrant repräsentiert dabei eine von vier möglichen Kombinationen von Drehrichtung und Momentenrichtung.

Durch eine definierte Ansteuerung bzw. Regelung des Verspannmotors kann das Prüfdrehmoment in engen Grenzen auf einem Sollwert gehalten werden, oder bei Bedarf auch einem vorgegebenen zeitlichen Verlauf, wie z. B. einem Sinusverlauf folgen.

Ein derartiger Verspannungsprüfstand ist in der DE 43 25 403 C2 offenbart. Dieser Verspannungsprüfstand zeichnet sich durch einen hohen Wirkungsgrad aus. Das verwendete Überlagerungsgetriebe ist kostengünstig und kompakt und zeichnet sich unter anderem durch eine hohe einstufige Übersetzung aus.

Die bei diesem bekannten Verspannungsprüfstand vorgesehene Bauform des Überlagerungsgetriebes mit einer flexiblen Buchse mit Außenverzahnung ist jedoch nur bis zu einer bestimmten Leistungsklasse verfügbar. Mit der größten Bauart dieser Getriebe lassen sich Prüfleistungen in einem Verspannungsprüfstand bis etwa 1 450 kW erzeugen. Insbesondere für die Prüfung der Hauptgetriebe von Hubschraubern mit einem Abfluggewicht von > 6 t reicht diese Prüfleistung nicht aus. Die geforderten Prüfleistungen reichen bis zu etwa 3 000 kW.

In anderen bekannten Verspannungsprüfständen ist das Überlagerungsgetriebe ein einfaches Planetengetriebe mit einem Sonnenrad, einem Hohlrad und mehreren Planetenrädern, welche gleichzeitig mit dem Sonnenrad und dem Hohlrad in Eingriff sind. Das Übersetzungsverhältnis eines solchen einfachen Planetengetriebes ist jedoch üblicherweise nicht größer als 10. Für die Verwendung als Überlagerungsgetriebe in einem Verspannungsprüfstand für hohe Prüfleistungen hätte dies zur Konsequenz, dass der Verspannmotor für sehr hohe Drehmomente ausgelegt sein müsste, was hohe Kosten verursachen und sich negativ auf die Dynamik der Ansteuerung auswirken würde.

Schließlich werden insbesondere in der Handhabungstechnik sogenannte Exzentergetriebe zur Leistungsübertragung von hochtourigen Antriebsmotoren eingesetzt, die bei einer hohen Übersetzung gute Wirkungsgrade aufweisen und spielfrei sind.

Ausgehend von einem Verspannungsprüfstand der eingangs genannten Art, liegt der Erfindung die Aufgabe zugrunde, einen Verspannungsprüfstand dahingehend weiterzuentwickeln, dass er für höhere Leistungsanforderungen geeignet ist.

Erfindungsgemäß wird die Aufgabe durch die im Anspruch 1 gegebene Merkmalskombination gelöst. Vorteilhafte Ausgestaltungen sind durch die abhängigen Ansprüche gegeben.

Der im Verspannkreis umlaufende Leistungsfluß wird direkt von der Drehmomentenstütze des Exzentergetriebes über das bzw. die Planetenräder auf das Abtriebsritzel übertragen, wobei sowohl die Drehmomentenstütze als auch das Abtriebsglied im Verspannkreis rotieren. Ist das Übersetzungsverhältnis von Prüfstandsgetriebe und Prüfgetriebe gleich, so ist die Antriebswelle vom Verspannmotor mit der gleichen Drehzahl zu betreiben, mit der die Drehmomentenstütze und das Abtriebsglied rotieren. In diesem Fall ist das Überlagerungsgetriebe verblockt. Bei unterschiedlichen Übersetzungsverhältnissen von Prüfstandsgetriebe und Prüfgetriebe wird die Drehzahldifferenz durch eine Relativrotation zwischen der Drehmomentenstütze und dem Abtriebsglied ausgeglichen. Hierzu ist die Antriebswelle vom Verspannmotor mit einer Drehzahl zu betreiben, die von der Drehzahl der im Verspannkreis rotierenden Elemente abweicht.

Vorteilhafte Wirkungen der Erfindungen sind die kompakte Bauform, die relativ geringe Teilezahl, sowie die sehr hohen übertragbaren Leistungsflüsse des Überlagerungsgetriebes. Das hohe Übersetzungsverhältnis erlaubt die Verwendung von kompakten Verspannmotoren. Exzentergetriebe zeichnen sich außerdem durch eine hohe Übertragungstreue aus, so dass eine hohe Gleichförmigkeit des Prüfdrehmoments erzielt werden kann.

In einer vorteilhaften Ausgestaltung der Erfindung weist das Exzentergetriebe mehrere gleichmäßig, winkelversetzt angeordnete Planeten auf, so dass sich die Unwuchten der einzelnen exzentrisch umlaufenden Planetenräder gegenseitig aufheben.

Eine ausreichende Kühlung und Schmierung, auch der nahe beim Drehzentrum liegenden Bauteile, des Exzentergetriebes kann dadurch gewährleistet werden, dass das Überlagerungsgetriebe ölgeschmiert ist und dass eine Kühl- und Schmierölversorgungseinrichtung für das Exzentergetriebe vorgesehen ist.

In einer Ausgestaltung weist hierzu die Antriebswelle des Exzentergetriebes Ölkanäle auf, die außerhalb des ölbefüllten Gehäuses an eine hydraulische Drehdurchführung angeschlossen sind.

Bei sehr hohen Drehzahlen im Verspannkreis von bis zu über 3 000 1/min kann die ausreichende Schmierung und Kühlung aller Bauteile dadurch gewährleistet werden, dass die Ölkanäle im Bereich von Wälzlagern für die Antriebswelle münden. Dem selben Zweck dient die Maßannahme, dass das Gehäuse des Exzentergetriebes vollständig ölbefüllt ist und im Betrieb das Kühl- und Schmieröl mit hohem Druck von vorzugsweise 4 bis 12 bar zugeführt wird. Damit wird verhindert, dass sich bei hohen Drehzahlen in der Nähe des Drehzentrums im Exzentergetriebe eine Luft- oder Gasblase ausbildet, welche eine ausreichende Schmierung der Antriebswellen- und Exzenterlager verhindern würde.

Um eine vollständige Ölbefüllung des Gehäuses gewährleisten zu können, ist eine Entlüftungsvorrichtung vorgesehen. Eine Verschleißüberwachung lässt sich in vorteilhafter Weise dadurch realisieren, dass in einer Ölrücklaufleitung ein Spänewarngeber angeordnet ist.

Vibrationen im Verspannkreis können vermieden werden, wenn das Exzentergetriebe ausgewuchtet ist.

Das Getriebe kann sowohl als separate, durch ein eigenes Gehäuse abgeschlossene Baueinheit im Verspannkreis angeordnet als auch in einer Getriebeeinheit des Verspannungsprüfstands integriert sein.

Weitere Einzelheiten der Erfindung werden nachfolgend anhand der beiliegenden Zeichnungen näher erläutert.
Es zeigen:
- Fig. 1: eine schematische Darstellung eines erfindungsgemäßen Verspannungsprüfstands und
- Fig. 2: eine Schnitt-Darstellung eines Exzentergetriebes mit einer Ölversorgungseinrichtung.

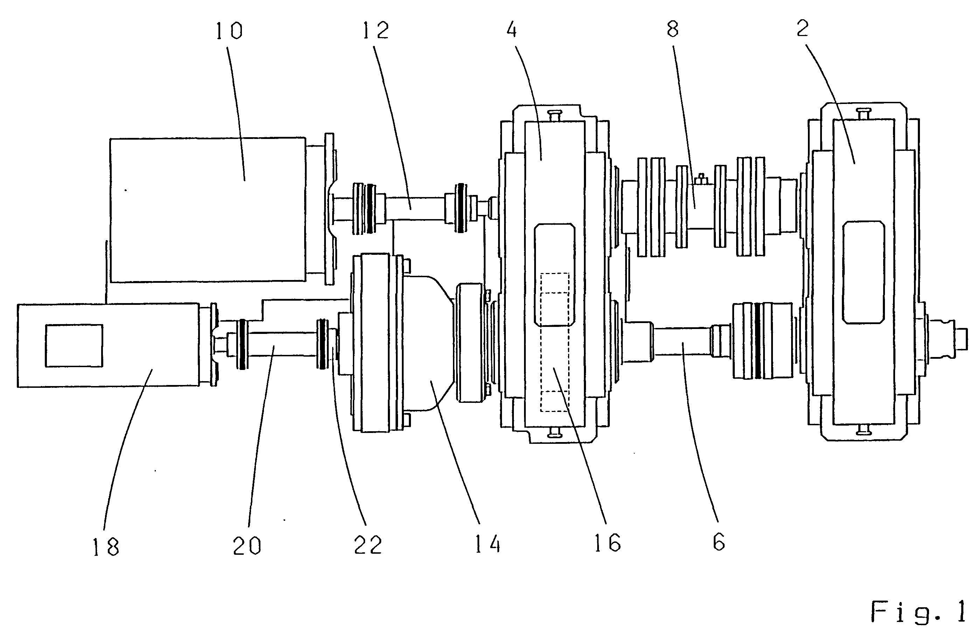

In Fig. 1 ist mit 2 das zu prüfende Getriebe und mit 4 eine Getriebeeinheit des Verspannungsprüfstands bezeichnet. Diese beiden Getriebe 2, 4 bilden mit den Wellen 6, 8 einen Verspannkreis. Die Welle 8 ist als Drehmomentmesswelle ausgebildet und mit Anschlüssen für Signalleitungen zu einer nicht dargestellten Mess- und Regeleinrichtung versehen. In dem dargestellten Ausführungsbeispiel sind beide Getriebeeinheiten 2, 4 als Stirnradgetriebe ausgebildet, wobei die axial versetzten Wellenanschlüsse durch die Stirnradstufen in trieblicher Verbindung stehen. Dem Verspannkreis wird durch den Hauptantriebsmotor 10, der über die Welle 12 mit einem Stirnrad des Getriebes 4 verbunden ist, eine Prüfdrehzahl aufgeprägt. Im Verspannkreis ist ein Exzentergetriebe 14 angeordnet, welches eine Drehmomentstütze und ein Abtriebsglied aufweist, wobei die Drehmomentstütze und das Abtriebsglied Übertragungsglieder des Verspannkreises bilden und im Betrieb rotieren. Die Drehmomentstütze, die im Gehäuse des Exzentergetriebes festgelegt ist, ist drehfest mit dem angedeuteten unteren Stirnrad 16 des Stirnradgetriebes 4 verbunden, während das Abtriebsglied durch das Getriebe 4 hindurch drehfest mit der Welle 6 verbunden ist. Der Verspannmotor 18 treibt über die Welle 20 die Antriebswelle 22 des Exzentergetriebes an, so dass die Drehmomentstütze und das Abtriebsglied gegeneinander mit einem Verspannmoment verspannt werden. Dieses Verspannmoment wirkt auf alle im Verspannkreis an der Drehmomentübertragung beteiligten Glieder und somit auch auf das zu prüfende Getriebe 2.

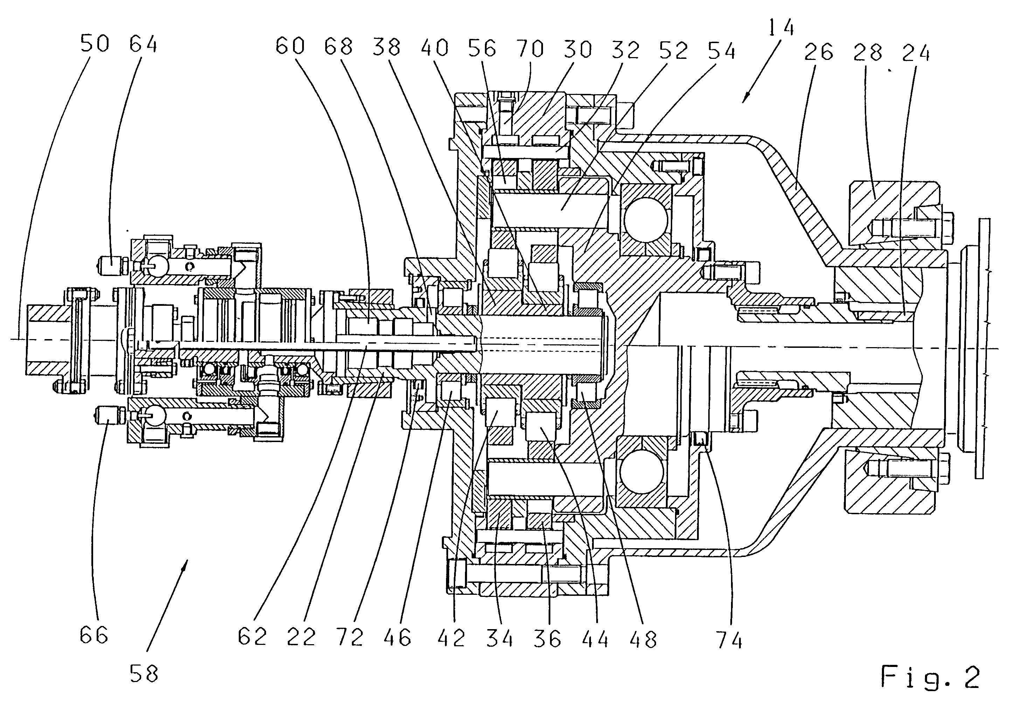

Das in Fig. 2 gezeigte Exzentergetriebe ist mit seiner Abtriebswelle 24 drehfest mit der Welle 6 (Fig. 1) verbunden. Das Gehäuse 26 ist am Flansch 28 mit dem Stirnrad 16 des Getriebes 4 (Fig. 1) verbunden. Die Antriebswelle 22 des Exzentergetriebes wird vom Verspannmotor 18 (Fig. 1) angetrieben bzw. mit einem Moment beaufschlagt. In dem Gehäuseteil 30 sind am Umfang eine Vielzahl von Bolzen 32 gleichmäßig verteilt angeordnet. Der so gebildete Bolzenring bildet die Drehmomentstütze, in welche die als Kurvenscheiben 34, 36 ausgebildeten Planeten während ihres exzentrischen Umlaufs eingreifen. Auf der Antriebswelle 22 sind zwei Exzenter 38, 40 um 180° versetzt angeordnet. Auf jedem Exzenter 38, 40 ist eine Kurvenscheibe 34, 36 mittels Rollenlager 42, 44 gelagert. Die Lager 46, 48 dienen zur Lagerung der Antriebswelle 22. Während die Exzenter 38, 40 mit der Drehzahl der Antriebswelle 22 umlaufen, treiben sie über die Rollenlager 42, 44 die Kurvenscheiben 34, 36 an. Dabei wälzen die Kurvenscheiben 36, 34 entlang des inneren Umfangs des Bolzenrings 32 ab. Bedingt durch einen Unterschied in der Anzahl der "Zähne" der Kurvenscheiben und der Bolzen des Bolzenrings 32, die typischerweise Eins beträgt, führt jede Kurvenscheibe, während sie in der zur Antriebswelle 22 koaxiale Hauptachse 50 des Getriebes 14 umkreist, eine entgegengesetzte Drehbewegung um die eigene exzentrische Achse aus. Diese langsame Drehbewegung wirkt durch die Bolzen 52 des Abtriebsglieds 54, welche in übergroße Bohrungen 56, welche in jeder Kurvenscheibe am Umfang verteilt vorgesehen sind, ein, so dass dem Abtriebsglied 54 die Drehbewegung der Kurvenscheiben aufgeprägt wird.

Zur Kühl- und Schmierölversorgung ist eine Schmierölversorgungseinrichtung vorgesehen. In Verlängerung der Antriebswelle 22 ist hierzu eine hydraulische Drehdurchführung 58 vorgesehen. Die Antriebswelle 22 ist hohl gebohrt und weist zwei konzentrische Ölkanäle 60, 62 auf, von denen einer über die hydraulische Drehdurchführung 58 mit dem Ölzulauf 64 und der andere mit dem Ölrücklauf 66 verbunden ist. Der Ölzulaufkanal 60 mündet im Bereich des Antriebswellenlagers 46 in eine radiale Bohrung 68, von der aus das Kühl- und Schmieröl dem Getriebe zugeführt wird. Das Öl wird mit hohem Druck durch die sehr engen Freiräume zwischen den Lagern und Drehmomentübertragungselementen hindurchgepreßt, wodurch eine fiktive Schmierung und Kühlung gewährleistet wird. Der Ölrücklaufkanal 62 mündet an der Stirnseite der Antriebswelle 22.

Das Getriebe ist vollständig ölbefüllt und während des Betriebs mit hohem Schmieröldruck beaufschlagt. Zur Ölbefüllung ist in den Gehäuseteil 30 eine verschließbare Entlüftungsbohrung 70 vorgesehen. Die für die Gewährleistung einer ausreichenden Kühlung und Schmierung, auch bei sehr hohen Drehzahlen, notwendigen hohen Drücke machen besondere Maßnahmen zur Abdichtung des Getriebes notwendig. An der Antriebswelle 22 sowie am Abtriebsglied 54 sind daher Doppellippendichtringe 72, 74 vorgesehen, die zwischen den beiden Lippen eine mit Fett gefüllte Kammer aufweisen.

Zum Auswuchten des Exzentergetriebes werden am Umfang des Gehäuseteils 30 an den Stellen mit zu viel Masse Radialbohrungen eingebracht.

### Bezugszeichen

- 2: zu prüfendes Getriebe
- 4: Getriebeeinheit
- 6: Welle
- 8: Drehmomentmeßwelle
- 10: Hauptabtriebsmotor
- 12: Welle
- 14: Exzentergetriebe
- 16: Stirnrad
- 18: Verspannmotor
- 20: Welle
- 22: Antriebswelle
- 24: Abtriebswelle
- 26: Gehäuse
- 28: Flansch
- 30: Gehäuseteil
- 32: Bolzen
- 34: Kurvenscheibe
- 36: Kurvenscheibe
- 38: Exzenter
- 40: Exzenter
- 42: Rollenlager
- 44: Rollenlager
- 46: Rollenlager
- 48: Rollenlager
- 50: Hauptachse
- 52: Bolzen
- 54: Abtriebsglied
- 56: Bohrung
- 58: hydraulische Drehdurchführung
- 60: Ölkanal
- 62: Ölkanal
- 64: Ölzulauf
- 66: Ölrücklauf
- 68: Bohrung
- 70: Entlüftungsbohrung
- 72: Dichtring
- 74: Dichtring

## Patentansprüche

1. Verspannungsprüfstand, mit mindestens zwei, einen Verspannkreis bildende Getriebeeinheiten (2, 4), diese verbindende Wellen (6, 8), einem Antrieb (10), einem ein Überlagerungsgetriebe (14) aufweisenden Verspannmechanismus zur Erzeugung eines Verspannmoments im Verspannkreis und zum Ausgleich von unterschiedlichen Übersetzungen der beiden Getriebeeinheiten (2, 4) und mit einem dem Verspannmechanismus zugeordneten Verspannmotor (18), **dadurch gekennzeichnet, dass** das Überlagerungsgetriebe ein Exzentergetriebe (14) ist, mit einer vom Verspannmotor (18) angetriebenen Antriebswelle (22), mit einer starren Drehmomentstütze (32), mit welcher mindestens ein außenverzahnter Planet (34, 36) in Eingriff ist, der durch mindestens einen, mit der Antriebswelle (22) trieblich verbundenen Exzenter (38, 40) in der Weise gelagert ist, dass er, während er die zur Antriebswelle (22) koaxiale Hauptachse (50) des Getriebes (14) umkreist, eine entgegengesetzte Drehbewegung um die eigene Achse ausführt, und mit einem vom Planeten angetriebenen Abtriebsglied (54), wobei die Drehmomentstütze (32) und das Abtriebsglied (54) Übertragungsglieder des Verspannkreises bilden und im Betrieb rotieren.

2. Verspannungsprüfstand nach Anspruch 1, **dadurch gekennzeichnet, dass** das Exzentergetriebe (14) mehrere gleichmäßig, winkelversetzt angeordnete Planeten (34, 36) aufweist.

3. Verspannungsprüfstand nach Anspruch 1 oder 2, **dadurch gekennzeichnet, dass** eine Kühl- und Schmierölversorgungseinrichtung für das Exzentergetriebe vorgesehen ist.

4. Verspannungsprüfstand nach Anspruch 3, **dadurch gekennzeichnet, dass** die Antriebswelle (22) des Exzentergetriebes (14) mindestens einen Ölkanal (60, 62) aufweist, der außerhalb eines ölbefüllten Gehäuses (30) an eine hydraulische Drehdurchführung (58) angeschlossen ist.

5. Verspannungsprüfstand nach Anspruch 4, **dadurch gekennzeichnet, dass** die Ölkanäle (60, 62) im Bereich von Lagern (46, 48) der Antriebswelle (22) münden.

6. Verspannungsprüfstand nach einem der Ansprüche 3 bis 5, **dadurch gekennzeichnet, dass** das Gehäuse (30) des Exzentergetriebes (14) vollständig ölbefüllt ist und im Betrieb das Kühl- und Schmieröl mit hohem Druck von vorzugsweise 8 bis 12 bar zugeführt wird.

7. Verspannungsprüfstand nach einem der Ansprüche 4 bis 6, **dadurch gekennzeichnet, dass** am Gehäuse eine Entlüftungsvorrichtung (70) vorgesehen ist.

8. Verspannungsprüfstand nach einem der Ansprüche 4 bis 7, **dadurch gekennzeichnet, dass** zur Abdichtung des Gehäuses des Exzentergetriebes (14) Doppellippendichtringe (72, 74) vorgesehen sind, die zwischen den beiden Lippen eine fettgefüllte Kammer aufweisen.

9. Verspannungsprüfstand nach einem der Ansprüche 3 bis 8, **dadurch gekennzeichnet, dass** eine Ölrücklaufleitung vorgesehen ist, in welcher ein Spänewarngeber zur Verschleißüberwachung angeordnet ist.

10. Verspannungsprüfstand nach einem der vorherigen Ansprüche, **dadurch gekennzeichnet, dass** das Exzentergetriebe ausgewuchtet ist.

11. Verspannungsprüfstand nach einem der vorhergehenden Ansprüche, **dadurch gekennzeichnet, dass** das Exzentergetriebe in einer Getriebeeinheit des Verspannkreis integriert ist.

## Claims

1. Stress test rig with at least two gear units (2, 4) forming a bracing circuit, shafts (6, 8) connecting the latter, a drive (10), a bracing mechanism incorporating a superposition gear (14) for creating a bracing torque in the bracing circuit and for compensating different transmission ratios of the two gear units (2, 4), and having a bracing motor (18) cooperating with the bracing mechanism, **characterised in that** the superposition gear is an eccentric gear (14) with a drive shaft (22) driven by the bracing motor (18), with a rigid torque brace (32) by means of which at least one externally toothed planet (34, 36) is engaged, which is mounted by means of at least one eccentric (38, 40) drivingly linked to the drive shaft (22) so that as it circumscribes the main axis (50) of the gear unit (14) coaxial with the drive shaft (22) it rotates in the opposite direction about its own axis, and having an output member (54) driven by the planets, the torque brace (32) and output member (54) constituting transmission members of the bracing circuit and rotating during operation.

2. Stress test rig as claimed in claim 1, **characterised in that** the eccentric gear (14) has several planets (34, 36) disposed at the same angle.

3. Stress test rig as claimed in claim 1 or 2, **characterised in that** a cooling and lubricant oil supply system is provided for the eccentric gear.

4. Stress test rig as claimed in claim 3, **characterised in that** the drive shaft (22) of the eccentric gear (14) has at least one oil duct (60, 62) which is connected to a hydraulic rotating bush (58) externally to an oil-filled housing (30).

5. Stress test rig as claimed in claim 4, **characterised in that** the oil ducts (60, 62) open in the region of bearings (46, 48) of the drive shaft (22).

6. Stress test rig as claimed in one of claims 3 to 5, **characterised in that** the housing (30) of the eccentric gear (14) is completely oil-filled and the cooling and lubricant oil is delivered at a high pressure of preferably 8 to 12 bar during operation.

7. Stress test rig as claimed in one of claims 4 to 6, **characterised in that** a venting device (70) is provided on the housing.

8. Stress test rig as claimed in one of claims 4 to 7, **characterised in that** double-lipped O-rings (72, 74) are provided as a means of sealing the housing of the eccentric gear (14), which have a grease-filled chamber between the two lips.

9. Stress test rig as claimed in one of claims 3 to 8, **characterised in that** an oil return line is provided, in which a chipping alarm transmitter is provided as a means of monitoring wear.

10. Stress test rig as claimed in one of the preceding claims, **characterised in that** the eccentric gear is balanced.

11. Stress test rig as claimed in one of the preceding claims, **characterised in that** the eccentric gear is integrated in a gear unit of the bracing circuit.

## Revendications

1. Banc de test de déformation avec au moins deux unités de transmission (2, 4) constituant un circuit de déformation, les arbres qui les relient (6, 8), un entraînement (10), un mécanisme de serrage comprenant une transmission de superposition (14) afin de générer un couple de déformation dans le circuit de déformation et pour compenser différentes démultiplications des deux unités de transmission (2, 4) et avec un moteur de déformation (18) associé au mécanisme de déformation, **caractérisé en ce que** la transmission de superposition est une transmission excentrique (14), avec un arbre d'entraînement (22) entraîné par le moteur de déformation (18), avec un appui de couple rigide (32), avec lequel au moins une roue planétaire à denture extérieure (34, 36) est en engrènement, logé par au moins un excentrique (38, 40) relié de manière motrice à l'arbre d'entraînement (22), de telle sorte que, pendant qu'il tourne autour de l'axe principal (50) de la transmission (14), coaxial par rapport à l'arbre d'entraînement (22), il effectue une rotation inverse autour de son propre axe, et avec un organe de sortie (54) entraîné par la roue planétaire, l'appui du couple (32) et l'organe de sortie (54) constituant des organes de transmission du circuit de déformation et tournant lors du fonctionnement.

2. Banc de test de déformation selon la revendication 1, **caractérisé en ce que** la transmission excentrique (14) comprend plusieurs roues planétaires (34, 36) disposées avec un décalage angulaire régulier

3. Banc de test de déformation selon la revendication 1 ou 2, **caractérisé en ce qu'**un dispositif d'alimentation en huile de refroidissement et de lubrification est prévu pour la transmission excentrique.

4. Banc de test de déformation selon la revendication 3, **caractérisé en ce que** l'arbre d'entraînement (22) de la transmission excentrique (14) comprend au moins un canal d'huile (60, 62) relié, à l'extérieur du carter rempli d'huile (30), à un passage rotatif hydraulique (58).

5. Banc de test de déformation selon la revendication 4, **caractérisé en ce que** les canaux d'huile (60, 62) débouchent au niveau de paliers (46, 48) de l'arbre d'entraînement (22).

6. Banc de test de déformation selon l'une des revendications 3 à 5, **caractérisé en ce que** le carter (30) de la transmission excentrique (14) est complètement rempli d'huile et l'huile de refroidissement et de lubrification est alimentée avec une pression élevée de 8 à 12 bars.

7. Banc de test de déformation selon l'une des revendications 4 à 6, **caractérisé en ce qu'**un dispositif de ventilation (70) est prévu au niveau du carter.

8. Banc de test de déformation selon l'une des revendications 4 à 7, **caractérisé en ce que**, pour l'étanchéité du carter de la transmission excentrique (14), sont prévues des bagues d'étanchéité à doubles lèvres (72, 74) qui comportent une chambre remplie de graisse entre les deux lèvres.

9. Banc de test de déformation selon l'une des revendications 3 à 8, **caractérisé en ce qu'**une conduite de retour d'huile est prévue, dans laquelle se trouve un détecteur de copeaux pour surveiller l'usure.

10. Banc de test de déformation selon l'une des revendications précédentes, **caractérisé en ce que** la transmission excentrique est équilibrée.

11. Banc de test de déformation selon l'une des revendications précédentes, **caractérisé en ce que** la transmission excentrique est intégrée dans une unité de transmission du circuit de déformation.
